## Europäisches Patentamt
## European Patent Office
## Office européen des brevets

(19)

(11) Veröffentlichungsnummer: **0 269 606 B1**

(12) **EUROPÄISCHE PATENTSCHRIFT**

(45) Veröffentlichungstag der Patentschrift: **18.09.91**

(51) Int. Cl.⁵: **G01L 23/08**

(21) Anmeldenummer: **87890242.8**

(22) Anmeldetag: **03.11.87**

(54) **Verfahren und Einrichtung zur Prüfung einer Brennkraftmaschine.**

(30) Priorität: **25.11.86 AT 3150/86**

(43) Veröffentlichungstag der Anmeldung:
**01.06.88 Patentblatt 88/22**

(45) Bekanntmachung des Hinweises auf die
Patenterteilung:
**18.09.91 Patentblatt 91/38**

(84) Benannte Vertragsstaaten:
**DE ES FR GB IT SE**

(56) Entgegenhaltungen:
**DE-A- 2 731 249**
**DE-A- 2 742 081**
**DE-B- 2 709 128**

(73) Patentinhaber: **AVL Gesellschaft für Verbren-**
**nungskraftmaschinen und Messtechnik**
**mbH.Prof.Dr.Dr.h.c. Hans List**
**Kleiststrasse 48**
**A-8020 Graz(AT)**

(72) Erfinder: **Lackner, Gerald, Dipl.-Ing.**
**Rudolf List Gasse 29**
**A-8010 Graz(AT)**
Erfinder: **Denk, Heimo, Dipl.-Ing.**
**St. Radegund-Strasse 30b**
**A-8045 Graz(AT)**

(74) Vertreter: **Pinter, Rudolf**
**Patentanwalt Dipl.-Ing. Rudolf Pinter Fasan-**
**gasse 49/22**
**A-1030 Wien(AT)**

Rank Xerox (UK) Business Services

## Beschreibung

Die Erfindung betrifft ein Verfahren zur Prüfung einer Brennkraftmaschine und insbesonders zur Ermittlung der relativen Kompression der Zylinder einer Brennkraftmaschine, wobei der Anlasserstrom, bzw. eine dazu proportionale elektrische Größe, bei unterbundener Zündung ausgewertet wird, sowie eine Einrichtung zur Durchführung dieses Verfahrens.

Ein derartiges Verfahren bzw. eine Einrichtung zur Durchführung desselben ist beispielsweise aus der DE-AS 27 09 128 bekannt. Es wird dabei die Stromaufnahme des Anlassermotors als Maß für den Druckverlauf in den einzelnen Zylindern bei während der Messung unterdrückter Zündung verwendet. Diese Stromaufnahme, bzw. eine dazu proportionale elektrische Größe, weist einen überlagerten Wechselanteil auf, der durch das pulsierende Gegenmoment der komprimierenden und expandierenden Zylinder während des bei unterbundener Zündung ablaufenden Anlaßvorganges entsteht und somit einen Vergleich der Kompression der einzelnen Zylinder erlaubt.

Dieses bekannte Verfahren weist einen gravierenden Nachteil auf, der darin besteht, daß sich im gemessenen Anlasserstrom bzw. der dazu proportionalen elektrischen Größe die Einflüsse der einzelnen Zylinder der Brennkraftmaschine unproportional darstellen. Es kommt beispielsweise dann, wenn ein Zylinder eine mangelhafte Kompression aufweist, bei dem im Maschinenzyklus nächstfolgenden Zylinder zu einer Stromüberhöhung, was eine Verzerrung der relativen Kompressionsunterschiede und damit eine Erschwerung einer Fehlersuche bzw. Mängelbehebung bedeutet.

In der genannten DE-AS 27 09 128 wird zur Korrektur der Einflüsse dieser unproportionalen Darstellung bei der Auswertung der Messung von den Integralwerten des bezüglich einer die Minima verbindenden Zeitachse integrierten Wechselanteils des Anlasserstromes ausgegangen. Zu diesen Integralwerten wird dann zur Korrektur der Unterschied zwischen dem Integralwert eines vollständigen Zyklus und dem Integralwert des vorhergehenden Zylinders mit umgekehrtem Vorzeichen addierte. Damit wird der Ansicht Rechnung getragen, daß der genannte Fehler durch einen Verlust an gespeicherter Arbeit in der komprimierten Luft entsteht; das heißt, daß es dann, wenn ein Zylinder eine mangelhafte Kompression aufweist, beim im Maschinenzyklus nächstfolgenden Zylinder zu einer Stromerhöhung kommt, weil ein Teil der in der komprimierten Luft des vorhergehenden Zylinders gespeicherten Energie infolge der schlechten Kompression ausfällt. Es hat sich jedoch gezeigt, daß mit den genannten Maßnahmen des bekannten Verfahrens keine zufriedenstellenden Genauigkeiten bzw. Zuverlässigkeiten bei Messungen an verschiedensten Brennkraftmaschinen und im normalen Meßbetrieb möglich sind.

Aufgabe der vorliegenden Erfindung ist es, ausgehend von dem bekannten Verfahren der eingangs genannten Art eine Verbesserung bei der relativen Kompressionsmessung an einer Brennkraftmaschine dahingehend zu erreichen, daß bei der Messung auf einfache und für die verschiedensten zu prüfenden Brennkraftmaschinen gleichermaßen zutreffende Weise signifikante und genaue relative Kompressionswerte der einzelnen Zylinder ermittelt werden können.

Dies wird gemäß der Erfindung dadurch erreicht, daß zur Ausschaltung einer Verzerrung der Kompressionsverhältnisse der einzelnen Zylinder bei der Auswertung des Anlasserstroms, bzw. der dazu proportionalen Größe, die Strom/Drehzahl-Charakteristik des Anlassers berücksichtigt wird. Die Erfindung geht also aus von der überraschend gefundenen Feststellung, daß die obengenannte unproportionale Darstellung der Einflüsse der einzelnen Zylinder nicht wie bisher angenommen hauptsächlich auf einen Verlust an in der komprimierten Luft gespeicherter Arbeit zurückgeht, sondern im wesentlichen auf die Einflüsse der nichtlinearen Strom/Drehzahl-Charakteristik des Anlassermotors. Das pulsierende Gegenmoment der komprimierenden und expandierenden Zylinder während des Anlaßvorganges ruft Drehzahlschwankungen am Anlassermotor hervor; zufolge einer nicht linearen Strom/Drehzahl-Charakteristik wirkt sich eine Schwankung um eine Drehzahl n aber bei verschieden hohen Drehzahlwerten in verschieden großen Stromschwankungen i aus. Durch die genannten Maßnahmen gemäß der vorliegenden Erfindung können also die unspezifischen Auswirkungen des Anlassers selbst auf die gemessene relative Kompression der einzelnen Zylinder auf einfache Weise beseitigt und signifikante Messungen sichergestellt werden.

Gemäß einer bevorzugten weiteren Ausgestaltung der Erfindung ist vorgesehen, daß bei einem Gleichstrom-Reihenschlußmotor als Anlasser bei der Auswertung vorerst aus dem Anlasserstrom i, bzw. der dazu proportionalen Größe, die der tatsächlichen Drehzahl proportionale Größe $N = I/i + K \cdot i$ gebildet wird, wobei der Korrekturwert $K$ zur Berücksichtigung der Abweichung der Strom/Drehzahl-Kennlinie des Anlassers vom hyperbolischen Verlauf dient, und daß zur Kompressionsbeurteilung dann die Amplituden des Wechselanteils dieser Größe $N$ herangezogen werden. Der Gleichstrom-Reihenschlußmotor ist heutzutage aus verschiedenen Gründen beim größten Teil aller mit elektrischem Anlasser versehenen Brennkraftmaschinen im Einsatz. Durch die genannte Ausgestaltung der Erfindung ist also auf einfache Weise für den Großteil aller anfallenden Brennkraftmaschinenprüfungen vorgesorgt. Der Korrekturwert K kann je nach Meßaufgabe für einen zu testenden speziellen Brennkraftmaschinentyp oder als für ein Spektrum verschiedener Typen geeigneter Mittelwert festgelegt werden und kann sowohl negative als auch positive Werte annehmen.

Zur Fehlerkorrektur auf die genannte Weise ist also die Messung bzw. Bestimmung sowohl des Wechsel- als auch des Gleichanteils des Anlasserstromes nötig, welche jedoch nur im Verhältnis zueinander und nicht in ihrem Absolutwert richtig gemessen werden müssen. Dies erlaubt den Ersatz der aufwendigeren Strommessung durch eine Spannungsmessung an der Batterie. Wenn man gemäß einer Weiterbildung der Erfindung in diesem Zusammenhang die Klemmenspannung der den Anlasser versorgenden Batterie bestimmt und um die vor dem Betätigen des Anlassers gemessene Leerlaufspannung reduziert, erhält man eine dem Strom proportionale Größe, die allenfalls geringfügige Genauigkeitseinbußen bei der Messung und dafür aber einen wesentlich verringerten Meßaufwand mit sich bringt.

Eine Einrichtung zur Durchführung des Verfahrens zur Ermittlung der relativen Kompression der Zylinder einer Brennkraftmaschine, mit einer Unterbrechungseinheit zur Unterbindung der Zündung der Brennkraftmaschine, einer mit dem Anlasserstromkreis der Brennkraftmaschine verbindbaren Aufnahmeeinheit, sowie einer mit der Aufnahmeeinheit in Verbindung stehenden Auswerteeinheit, ist gemäß der Erfindung dadurch gekennzeichnet, daß die Auswerteeinheit eine Korrektureinheit zur Berücksichtigung der Strom/Drehzahl-Charakteristik des Anlassers umfaßt. In dieser Korrektureinheit kann die obenbeschriebene, der tatsächlichen Drehzahl proportionale Größe N gebildet werden, deren Wechselamplitude dann zur Kompressionsbeurteilung dient.

Die Erfindung wird im folgenden anhand der Zeichnung näher erläutert.

Fig. 1 zeigt ein Drehmoment/Zeit-Diagramm des dem Anlasser entgegenwirkenden pulsierenden Moments einer Brennkraftmaschine,

Fig. 2 zeigt das zur Fig. 1 gehörige Winkelgeschwindigkeit/Zeit-Diagramm,

Fig. 3 zeigt das den Fig. 1 und 2 zugehörige Anlasserstrom/Zeit-Diagramm,

Fig. 4 zeigt eine Strom/Drehzahl-Kennlinie eines Gleichstrom-Reihenschlußmotors und

Fig. 5 zeigt ein Blockschaltbild eines Ausführungsbeispiels einer erfindungsgemäßen Einrichtung zur Ermittlung der relativen Kompression der Zylinder einer Brennkraftmaschine.

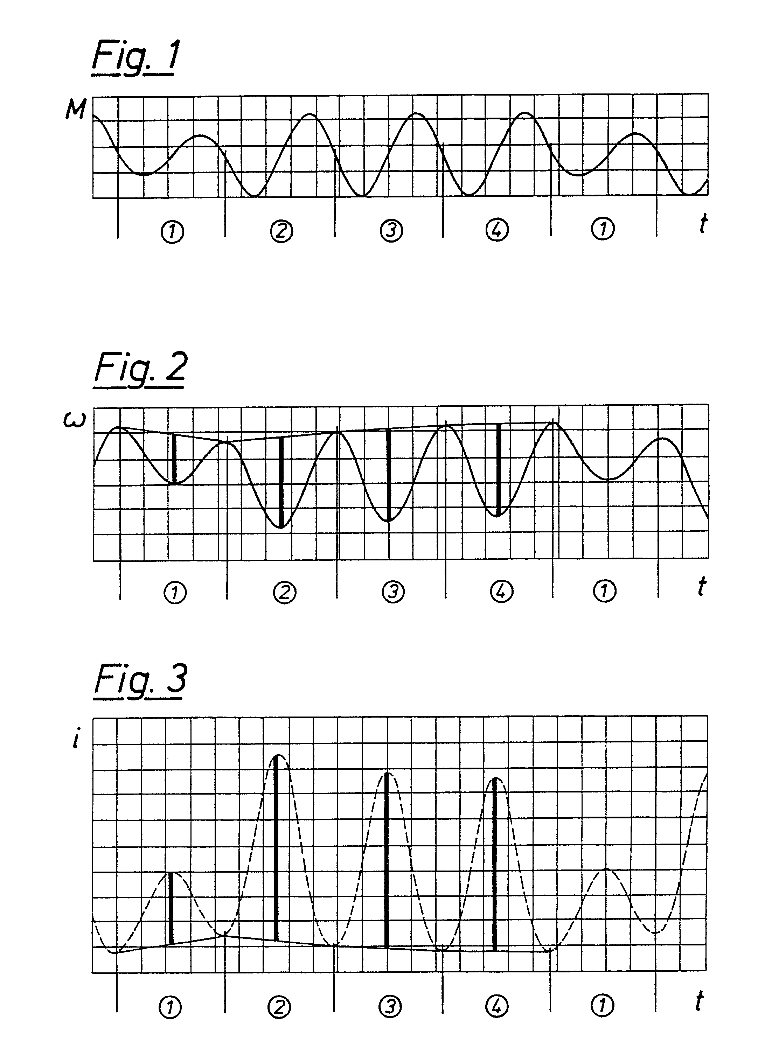

Der Kompressionsdruck der vier Zylinder - in den Fig. 1 bis 3 mit eingekreisten Nummern 1 bis 4 bezeichnet - einer nicht weiter dargestellten Brennkraftmaschine wird sehr gut durch die Amplituden des pulsierenden Momentes M wiedergegeben, das dem Anlasser entgegenwirkt. In der Fig. 1 ist der erste Zylinder mit einem Kompressionsverlust dargestellt, was einem geringeren, dem Anlasser entgegenwirkenden Moment M entspricht.

In Fig. 2 ist der aus dem Momentenverlauf nach Fig. 1 resultierende Verlauf der Winkelgeschwindigkeit $\omega$ an der Kurbelwelle der Brennkraftmaschine ersichtlich. Die die Momentenamplituden und damit den Kompressionsdruck widergebenden, mit dicken Linien angezeichneten Amplituden weisen im Diagramm nach Fig. 2 noch nicht den oben besprochenen systematischen Fehler auf, da ja hier noch nicht die Strom/Drehzahl-Charakteristik des Anlassermotors sich auswirken kann.

Im Diagramm nach Fig. 3, welches den Anlasserstrom i über der Zeit t zeigt, ist nun aber deutlich die Übertreibung des Kompressionsverlustes im schlecht komprimierenden ersten Zylinder und die Erhöhung des nachfolgenden zweiten Zylinders sichtbar. Die Ursache dafür liegt in der nichtlinearen Strom/Drehzahl-Charakteristik des üblicherweise für einen elektrischen Anlasser verwendeten Gleichstrom-Reihenschlußmotors.

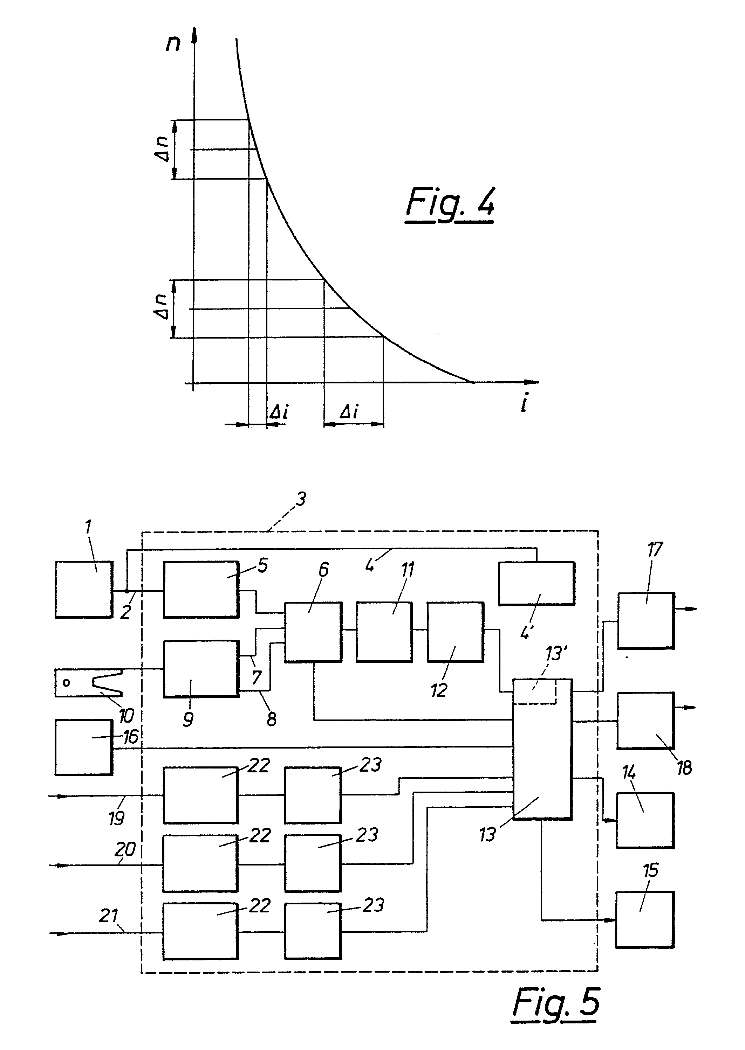

Die Strom/Drehzahl-Charakteristik eines solchen Motors ist - unter Vernachlässigung der magnetischen Sättigung - eine infolge des Wicklungswiderstandes verschobene Hyperbel (l/i), wie dies aus Fig. 4 ersichtlich ist. Aus dieser Fig. 4 ist zu ersehen, wie der erwähnte systematische Fehler an einer solchen nichtlinearen Kennlinie entsteht; eine Drehzahlschwankung um $\Delta$ n wirkt sich bei hohen Drehzahlwerten n in einer kleineren Stromschwankung $\Delta$ i aus, als bei kleinen Drehzahlwerten. Dieser Fehler kann nun sehr einfach und vorteilhaft dadurch korrigiert werden, daß zur tatsächlichen Kompressionsbeurteilung eine Größe N herangezogen wird, die sich aus dem tatsächlich festgestellten Anlasserstrom i wie folgt ergibt:

$$N = l/i + K.i$$

wobei der Korrekturfaktor K zur Berücksichtigung der Abweichung der Anlassercharakteristik vom idealen hyperbolischen Verlauf dient. K kann dabei je nach Meßaufgabe für einen zu testenden speziellen Motortyp oder als für ein Spektrum verschiedener Typen geeigneter Mittelwert festgelegt werden und sowohl negative als auch positive Werte annehmen.

Die Amplituden des auf diese Weise gewonnenen Verlaufs der Größe N werden zur Beurteilung der relativen Kompression herangezogen. Zur Fehlerkorrektur auf diese Weise ist also die Messung sowohl des Wechsel- als auch des Gleichanteils des Anlasserstroms i nötig, welche jedoch nur in ihrem Verhältnis zueinander richtig gemessen werden müssen. Die Kenntnis des Absolutwertes ist dabei nicht nötig. Dies erlaubt - allenfalls unter Inkaufnahme eine Genauigkeitseinbuße - den Ersatz der aufwendigeren Strommessung durch eine Spannungsmessung an der den Anlasser versorgenden Batterie. Wird die gemessene Klemmenspannung von der Leerlaufspannung der Batterie subtrahiert, so erhält man eine dem Anlasserstrom proportionale Größe, die nach Durchführung der oben angesprochenen Korrektur ebenfalls unmittelbar zur Beurteilung der relativen Kompression herangezogen werden kann.

In Fig. 5 ist ein Blockschaltbild einer Vorrichtung zur Durchführung des beschriebenen Verfahrens dargestellt. An einer Batterie 1 ist auf nicht dargestellte Weise der Anlasser einer hinsichtlich der relativen Kompression der einzelnen Zylinder zu prüfenden Brennkraftmaschine angeschlossen. Über eine Leitung 2 steht die Batterie 1 mit einem Meßgerät 3 in Verbindung, welches über eine Einheit 4'und eine Leitung 4 von der Batterie 1 her mit Spannung versorgt wird. Über eine Signalaufbereitung 5 kann ein der Batteriespannung proportionales Signal einem Multiplexer 6 zugeführt werden. Dieser Multiplexer 6 ist über Leitungen 7, 8 mit einer weiteren Signalaufbereitung 9 verbunden, welche von einer Strommeßzange 10 mit einem dem Anlasserstrom entsprechenden Signal versorgt werden kann. Über den Multiplexer 6 kann die Auswahl des jeweils gewünschten Signals vorgenommen werden, welches dann über ein Abtastglied 11 und einen nachgeschalteten Analog-Digitalwandler 12 einer Auswerteeinheit 13 zur Verarbeitung entsprechend dem oben beschriebenen Verfahren zugeführt wird. Die Anschlüsse an der Batterie 1, bzw. die Strommesszange 10 sowie die Signalaufbereitungen 5, 9 samt den nachfolgenden Einheiten bilden dabei eine Aufnahmeeinheit für die zu messenden Größen.

Die Auswerteeinheit 13 - welche beispielsweise von einem Mikroprozessor gebildet sein kann - umfaßt auch eine Korrektureinheit 13', welche eine Berücksichtigung der Strom/Drehzahl-Charakteristik des Anlassers ermöglicht. Dadurch können die bei derartigen Kompressionsmessungen zu beobachtenden systematischen Fehler auf beschriebene Weise ausgeglichen werden, welche ansonsten die relativen Kompressionsunterschiede der einzelnen Zylinder stark verzerren und schlüssige diesbezügliche Aussagen erschweren.

An der Auswerteeinheit 13 ist eine Anzeigeeinheit 14, beispielsweise ein LC-Display, und ein Drucker 15 zur Ausgabe der Meßwerte angeschlossen. Auf diesen Anzeigen können neben den relativen Kompressionswerten der einzelnen Zylinder der geprüften Brennkraftmaschine beispielsweise auch Starterdrehzahl, Mittelwert des Stromes, Mittelwert der Spannung, Welligkeiten, usw. angezeigt werden.

Ebenfalls mit der Auswerteeinheit 13 in Verbindung steht eine Bedieneinheit 16, über welche die verschiedenen Arbeitsweisen der Einrichtung bzw. des Meßgeräts gesteuert werden können.

Die Unterdrückung der Zündung bei Ottomotoren wird über eine Unterbrechungseinheit 17 auf entsprechenden Befehl der Auswerteeinheit 13 durchgeführt. An der nicht weiter dargestellten Brennkraftmaschine muß dazu nur ein Anschluß an der Unterbrecherklemme vorgenommen werden.

Zur Unterdrückung der Einspritzung bei Dieselmotoren kann beispielsweise das Schließen des Magnetventils der Einspritzpumpe über eine Unterbrechungseinheit 18 herbeigeführt werden. An der zu prüfenden Brennkraftmaschine kann dazu beispielsweise die Steuerleitung zum Magnetventil aufgetrennt und durch die Einheit 18 durchgeschleift werden.

Zur Zylinderidentifikation, also zur Zuordnung der beispielsweise gemäß Fig. 3 aufgenommenen zylinderspezifischen Amplituden zu den tatsächlich verursachenden Zylindern, können der Auswerteeinheit 13 im Falle eines zu prüfenden Ottomotors über eine Leitung 19 Signale eines nicht weiter dargestellten kapazitiven Sensors zugeführt werden, der auf das Zündkabel beispielsweise des ersten Zylinders aufgeklemmt wird. Im Falle der Messung an Dieselmotoren können zur Zylinderidentifikation die Signale von auf die Einspritzleitungen aufgeklemmten und deren Umfangsvergrößerung während des Einspritzvorganges detektierenden Sensoren nach entsprechender Aufbereitung dem Mikroprozessor zugeführt werden. An denselben Anschlüsse 21 können aber auch induktive und mit Hall-Effekt arbeitende Nadelbewegungsgeber angeschlossen werden. In Motoren mit für den Einsatz von OT-Sensoren vorbereiteten Marken kann einer dieser über eine Leitung 20 angeschlossen werden, der in Verbindung mit einem Aufklemmsensor die Zylinderidentifikation erlaubt. In die Signalleitungen 19, 20, 21 sind jeweils Signalaufbereitungen 22 und Impulsformer 23 vor dem Anschluß an die Auswerteeinheit 13 eingeschaltet.

Der Meßablauf zur Ermittlung der relativen Kompression der Zylinder einer Brennkraftmaschine läßt sich anhand des Beispiels, bei welchem die Zylinderidentifikation mittels an allen Einspritzleitungen aufgeklemmten Sensoren durchgeführt wird, kurz wie folgt beschrieben: Die Zündung der Brennkraftmaschine wird je nach Typ über die Unterbrechungseinheit 17 oder 18 unterdrückt - soferne dies beispielsweise bei Dieselmotoren nicht möglich ist, kann auch eine Einstellung auf Nullförderung von Hand vorgenommen werden. Während des anschließenden Anlaßvorgangs wird nach Erreichen der stabilen Anlasserdrehzahl entweder der Anlasserstrom oder aber die Batteriespannung gemessen, wobei gleichzeitig die Amplituden der auftretenden Welligkeit numeriert werden. Sobald für die Auswertung ausreichend viele Zyklen abgetastet sind, wird die Unterdrückung der Zündung aufgehoben und die oben genannten Sensoren geben ihre entsprechenden Signale ab. Mit diesen Signalen wird die genannte Numerierung der den einzelnen Zylinder zugehörigen Amplituden fortgesetzt bis zum Auftreten des Signals jenes Sensors, der einem bestimmten Zylinder, vorzugsweise dem ersten Zylinder, zuordnenbar ist. Bei bekannter Zylinderanzahl und Zündfolge können mit dieser Information die aufgenommenen Strom- oder Spannungsamplituden den einzelnen Zylindern zugeordnet werden.

**Patentansprüche**

1. Verfahren zur Prüfung einer Brennkraftmaschine und insbesonders zur Ermittlung der relativen Kompression der Zylinder einer Brennkraftmaschine, wobei der Anlasserstrom, bzw. eine dazu proportionale elektrische Größe, bei unterbundener ZÜndung ausgewertet wird, **dadurch gekennzeichnet, daß** zur Ausschaltung einer Verzerrung der Kompressionsverhältnisse der einzelnen Zylinder bei der Auswertung des Anlasserstroms, bzw. der dazu proportionalen Größe, die Strom/Drehzahl-Charakteristik des Anlassers berücksichtigt wird.

2. Verfahren nach Anspruch 1, dadurch gekennzeichnet, daß bei einem Gleichstrom-Reihenschlußmotor als Anlasser bei der Auswertung vorerst aus dem Anlasserstrom i, bzw. der dazu proportionalen Größe, die der tatsächlichen Drehzahl proportionale Größe $N = I/i + K.i$ gebildet wird, wobei der Korrekturwert K zur Berücksichtigung der Abweichung der Strom/Drehzahl-Kennlinie des Anlassers vom hyperbolischen Verlauf dient, und daß zur Kompressionsbeurteilung dann die Amplituden des Wechselanteils dieser Größe N herangezogen werden.

3. Verfahren nach Anspruch 1 oder 2, dadurch gekennzeichnet, daß zur Ermittlung einer dem Anlasserstrom proportionalen Größe die Klemmenspannung der den Anlasser versorgenden Batterie bestimmt und um die vor dem Betätigen des Anlassers gemessene Leerlaufspannung reduziert wird.

4. Einrichtung zur Durchführung des Verfahrens nach einem der Ansprüche 1 bis 3, mit einer Unterbrechungseinheit zur Unterbindung der Zündung der Brennkraftmaschine, einer mit dem Anlasserstromkreis der Brennkraftmaschine verbindbaren Aufnahmeeinheit, sowie einer mit der Aufnahmeeinheit in Verbindung stehenden Auswerteeinheit, **dadurch gekennzeichnet,** daß die Auswerteeinheit (13) eine Korrektureinheit (13') zur Berücksichtigung der Strom/Drehzahl-Charakteristik des Anlassers umfaßt.

**Claims**

1. Method of testing an internal combustion engine and in particular for determining the relative compressions of the cylinders of an engine, the starter current or an electrical magnitude proportional to it being evaluated with the ignition disabled, characterised in that to eliminate distortion of the compression relationships of the individual cylinders in the evaluation of the starter current or of the magnitude proportional to it, account is taken of the current/rotational speed characteristic of the starter.

2. Method according to Claim 1 characterised in that with a direct current series-connected motor as the starter, in the evaluation first a magnitude $N = 1/i + Ki$ is formed, proportional to the actual speed of rotation, from the starter current i or from the magnitude proportional to it, the correction factor K serving to take account of the departure of the current/speed characteristic of the starter from the hyperbolic curve, and that for arriving at a decision on the compression the amplitudes of the alternating component of this magnitude N are then derived.

3. Method according to Claim 1 or 2 characterised in that for determining a magnitude proportional to the starter current, the voltage at the terminals of the battery which supplies the starter is determined and is reduced by the amount of the open-circuit voltage measured before operation of the starter.

4. Device for carrying out the method according to one of Claims 1 to 3, with an interrupter unit for disabling the ignition of the engine, a pick-up unit capable of connection to the starter circuit of the engine and an evaluating unit connected to the pick-up unit, characterised in that the evaluating unit (13) incorporates a correction unit (13') for taking account of the current/speed characteristic of the starter.

**Revendications**

1. Procédé pour l'essai d'un moteur à combustion interne et en particulier pour la détection de la compression relative du cylindre d'un moteur à combustion interne, dans lequel on évalue le courant de démarreur ou une grandeur électrique qui lui est proportionnelle alors que l'allumage est coupé, caractérisé en ce que l'on observe la caractéristique courant/vitesse de rotation du démarreur afin de faire disparaître une distorsion des rapports de compression des différents cylindres lors de l'évaluation du courant de démarreur ou de la grandeur électrique proportionnelle à ce dernier.

2. Procédé selon la revendication 1 caractérisé en ce que, dans le cas où l'on utilise comme démarreur un moteur série à courant continu comme démarreur, on forme tout d'abord à partir du courant de démarreur i ou de la grandeur qui lui est proportionnelle, la grandeur $N = 1/i + K.i$ proportionnelle à la vitesse de rotation effective, la grandeur correctrice K servant à prendre en considération la dérive de la courbe caractéristique courant/vitesse de rotation du démarreur à partir d'un profil hyperbolique, et en ce que pour évaluer la compression, on soustrait les amplitudes de la partie alternative de cette grandeur N.

3. Procédé selon la revendication 1 ou 2, caractérisé en ce qu'on règle la tension aux bornes de la batterie alimentant le démarreur pour rechercher une grandeur proportionnelle au courant du démarreur et on la réduit de la tension de marche à vide mesurée avant l'actionnement du démareur.

4. Dispositif pour la mise en oeuvre du procédé selon l'une des revendications 1 à 3, comportant une unité d'interruption pour réaliser la coupure de l'allumage du moteur à combustion interne, une unité de capteur susceptible d'être reliée au circuit du courant de démarreur du moteur à combustion interne, ainsi qu'une unité d'évaluation qui est en liaison avec l'unité de capteur, caractérisé en ce que l'unité d'évaluation (13) comprend une unité de correction (13') pour tenir compte de la caractéristique courant/vitesse de rotation du démarreur.

## Fig._1

## Fig._2

## Fig._3

*Fig. 4*

*Fig. 5*